# EUROPEAN PATENT SPECIFICATION

(11) **EP 4 468 910 B1**
(45) Date of publication and mention of the grant of the patent: **29.10.2025**
(21) Application number: 23700910.5
(22) Date of filing: 18.01.2023
(51) Int. Cl.: A43B 13/04, A43B 13/12, A43B 13/18, C08G 18/42, C08G 18/48, C08G 18/76, A43B 7/32

(54) **LIGHT SAFETY SHOE**
LEICHTSICHERHEITSSCHUH
CHAUSSURE DE SÉCURITÉ LÉGÈRE

(30) Priority: 26.01.2022 IT 202200001307
(43) Date of publication of application: 04.12.2024
(73) Proprietor: U-POWER GROUP S.P.A., 28040 Paruzzaro (NO) (IT)
(72) Inventor: UZZENI, Pier Franco, 28041 DAGNENTE (NO) (IT)
(74) Representative: Colombo, Stefano Paolo
(86) International application number: PCT/IB2023/050430
(87) International publication number: WO 2023/144660

(56) References cited:
- EP-A1- 3 648 628
- WO-A1-2019/008453
- US-A1- 2020 163 406
- DELTA PLUS GROUP: "The Safety Book, cat 2019-GB", 30 September 2019 (2019-09-30), XP055700537, Retrieved from the Internet <URL:http://publication.deltaplus.eu/CAT-2019-GB/offline/download.pdf> [retrieved on 20200603]

## Description

The present invention relates to a light safety shoe.

Safety shoes are known from the state of the art, which are capable of providing the user with a desired degree of protection in case of accidental events.

As is known, professional work shoes are to comply with stringent standards, included among which are:
- UNI EN ISO 20345, relative to safety footwear with toecap resistance at 200 J;
- UNI EN ISO 20346, relative to safety footwear with toecap resistance at 100 J;
- UNI EN ISO 20344, relative to testing methods and general requirements.

In particular, in order to be defined as safety or accident-prevention shoes, the work shoes must be provided with a safety toecap and therefore comply with standards EN ISO 20344, EN ISO 20345 and EN ISO 20346.

Safety shoes therefore comprise an upper assembly provided, at the shoe toe, with a safety toecap which is sufficiently structured, and therefore rigid, to resist knocks or crushing, thus protecting the user's foot.

Furthermore, the safety shoes generally also comprise an anti-puncture sheet, placed below the insole, which protects the sole of the foot from sharp or pointed objects that the user might step on.

In general, since work footwear is involved, it is intended to be worn by the user continuously for several hours a day.

Currently, however, the safety shoes of known type have a significant weight, which, for a single European size 42 shoe, is generally more than 550 grams. For example, WO2019008453A1 discloses a safety shoe that has an upper provided with a safety toe cap at toe region and a multi-layered sole.

Delta Plus Group: "The Safety Book, cat 2019-GB" discloses many articles for work safety, including light safety shoes.

Such weight is determined first and foremost by the fact that the materials from which the various parts of the shoes are made must ensure particular resistance to the shoe itself, in order to ensure lasting use. In fact, whether related to the sole or upper, the materials must be resistant to abrasion, to damage that may occur from blows or from sharp or pointed objects, to damage from contact with corrosive chemicals.

Furthermore, the need to provide, and integrate into the shoe, the safety toecap and the anti-puncture sheet means a further increase in the weight of the shoe. In fact, if they also comprise a steel anti-puncture sheet, some well-known safety shoes have an average weight, for a single European size 42 shoe, of up to 600 grams.

In order to ensure adequate durability in the working environments where safety shoes are used, the soles of safety shoes are generally manufactured by means of injection moulding techniques directly onto the upper. In fact, it is well known that the alternative to moulding the sole onto the upper, consisting of bonding the upper to the sole, does not allow for equally durable and high-performance safety shoes, and is in fact scarcely adopted.

It is also evident that the heavier the shoes, the less comfortable they are for the user, particularly in view of the fact that safety shoes are worn continuously for many hours a day and that the users are often engaged in activities that require frequent movement.

The main task of the present invention is to create a safety shoe that is significantly lighter than the known safety shoes, even if provided with an anti-puncture sheet, and that is capable of ensuring not only a high level of comfort for the user, but also a high level of durability and longevity.

Within the scope of this task, it is an object of the present invention to make a light safety shoe that meets the requirements of any type of user.

The task disclosed above, and also the objects mentioned and others which are more apparent below, are achieved by a light safety shoe as illustrated in claim 1.

Other features are comprised in the dependent claims.

Further features and advantages shall be more apparent from the description of a preferred, but not exclusive, embodiment of a light safety shoe, illustrated by mere way of non-limiting example with the aid of the accompanying drawings, in which:

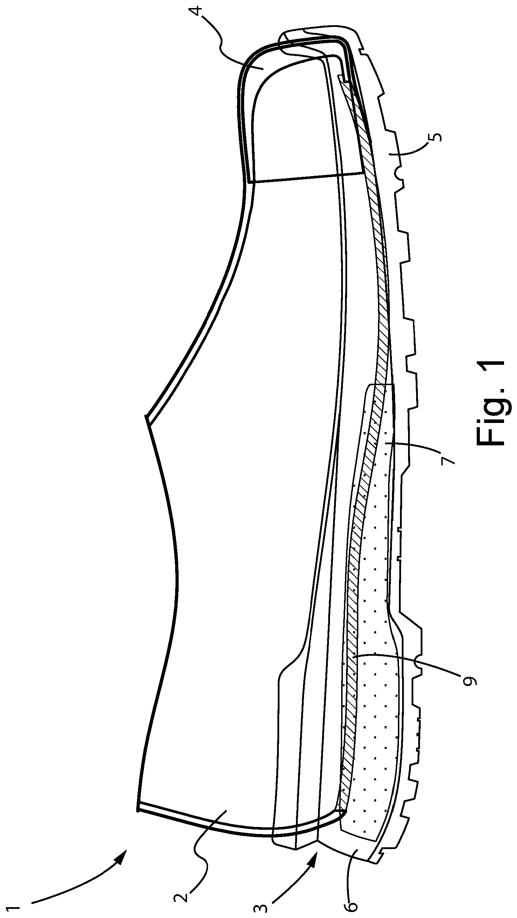

figure 1 is an overall view, elevated from the side, of the light safety shoe according to the invention;

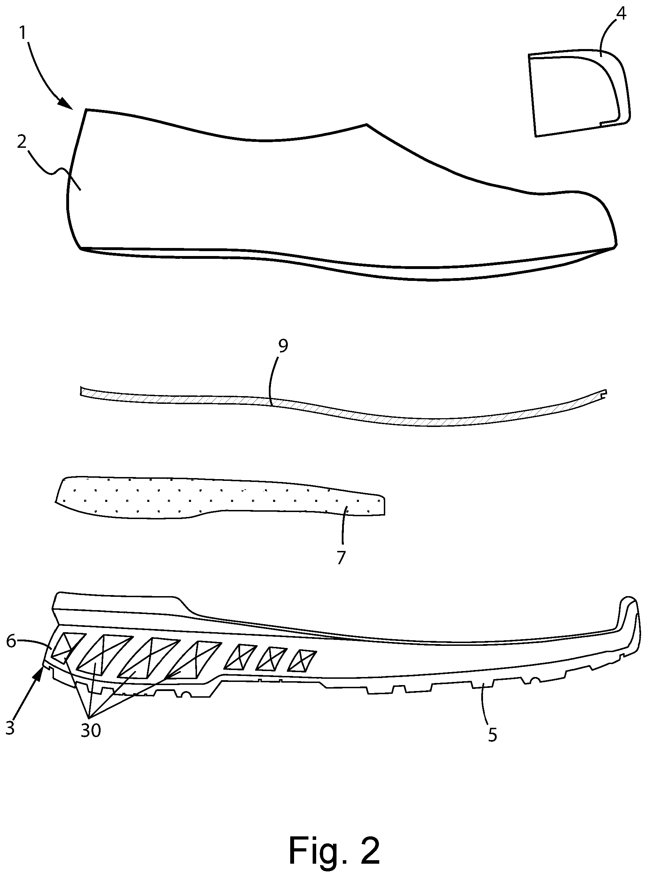

figure 2 is an exploded side view of the light safety shoe of figure 1, according to the invention;

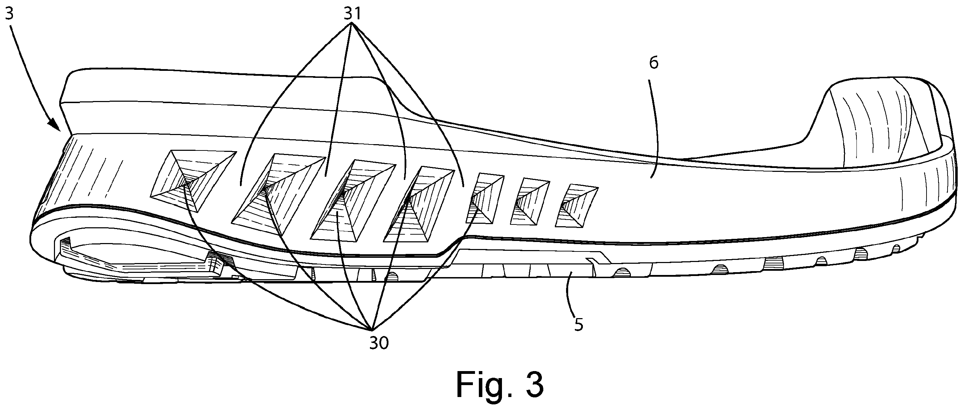

figure 3 is a perspective view of a component of the light safety shoe from figure 1, according to the invention.

With reference to the above figures, the light safety shoe, indicated globally by reference number 1, comprises:
- an upper 2;
- a sole 3 made by means of injection moulding directly onto the upper 2;
- a safety toecap 4 placed at the toe of the shoe 1;
- an anti-puncture sheet 9, housed in the sole (3);
- a functional insert 7 placed within said sole 3, below said anti-puncture sheet 9.

Furthermore:
- the upper 2 is made of non-woven fabric having a mass per unit area, measured according to standard UNI EN ISO 3801, lower than 1000 g/m²;
- the sole 3 is made of a polyester-based polyurethane with a density, measured according to measurement standard UNI EN ISO 845, lower than 450 kg/m³;
- the anti-puncture sheet 9 is made of non-woven fabric and has a mass per unit area, measured according to EN ISO 2286-2, lower than 2400 g/m²;
- the functional insert 7 is made of an expanded polyethylene-based compound having a density, measured according to DIN 53420, lower than 70 kg/m³.

According to the invention, the light safety shoe 1 has, with reference to a European size 42, a weight lower or equal to 400 grams.

Preferably, the polyester-based polyurethane with which the sole 3 is made has a density, measured according to measurement standard UNI EN ISO 845l, lower than 430 Kg/ m³, preferably between 400 and 450 Kg/m³, for example substantially equal to about 420 kg/m³.

The sole 3 can be made of a polyester-based polyurethane having a Shore hardness between 37 and 48 Shore A inclusive, preferably between 40 and 45 inclusive, and even more preferably between 41 and 43 inclusive. For example, in a preferred embodiment of the shoe 1, the polyester-based polyurethane has a hardness of 42 Shore A measured according to DIN 53505. Alternatively, according to ASKER standards, the polyester-based polyurethane used to make the sole 3 has a hardness preferably between 50 and 60 Asker C. For example, the polyester-based polyurethane has a hardness of 55 Asker C, which corresponds to 42 Shore A hardness measured according to DIN 53505.

The sole 3 can be made of a polyester-based polyurethane having a rebound between 38% and 43%, preferably greater than or equal to 40%, e.g., equal to about 40.5%.

The aforesaid resilience values of the materials with which the sole 3 is made are measured according to measurement standard DIN 53512 ("Determining the rebound resilience of rubber using the Schob pendulum") and depict the ratio between the rebound energy by an elastomer subjected to a bump and the energy applied to such elastomer during the bump itself.

The functional insert 7 can be made of an expanded polyethylene-based compound having a Shore hardness, measured according to DIN 53505, between 21 and 34 Shore A inclusive, preferably between 23 and 29 Shore A, e.g., equal to 26 Shore A.

Preferably, the expanded polyethylene with which the functional insert 7 is made is a closed-cell expanded polyethylene that is chemically cross-linked.

Preferably, such material has an elongation at longitudinal break, measured according to DIN 53571, greater than 85%, preferably greater than 90%, and an elongation at transverse break greater than 95%, preferably greater than 100%.

Preferably, such material has a density, measured according to standard DIN 53420, lower than 60 kg/m³, more preferably between 45 and 55 kg/m³.

Preferably, the functional insert 7 extends at the rear area of the light safety shoe 1 on a surface greater than 45% of the total surface of the sole 3, preferably on a surface substantially between 45% and 60% of the total surface of the sole 3, and preferably between 53% and 57%, and even more preferably around 55%. Always preferably, the functional insert 7, with reference to a European size 42, has a length between 60 mm and 80 mm and a width between 40 mm and 60 mm. For example, with reference to a European size 42, the functional insert 7 has a length of 70 mm and a width of 50 mm.

Preferably the functional insert 7 has a thickness greater than 10 millimetres, with reference to a European reference size 42, preferably between 12 and 18 millimetres. For example, with reference to a European size 42, the functional insert 7 is 15 millimetres thick.

Thereby, the sole 3 is significantly lighter overall thanks to the presence of such a functional insert 7.

Furthermore, the aforesaid dimensions of the functional insert 7 allow to provide an adequate support surface for the heel of the user's foot during the user's activities in the working day.

Preferably, the anti-puncture sheet 9 is in direct contact with the upper face of the functional insert 7.

The anti-puncture sheet 9 can be made of non-woven fabric comprising high-density polyethylene fibres, synthetic resins, and steel fibres. Preferably such a non-woven fabric comprises high-density polyethylene fibres in a range between 75% and 89% by weight, synthetic resins in a range between 5 and 15% by weight and steel fibres in a range between 4% and 12% by weight. For example, in a preferred embodiment of the shoe 1, the anti-puncture sheet 9 comprises 82% high-density polyethylene fibres, 10% synthetic resins and 8% steel fibres.

Always preferably, the anti-puncture sheet 9 has a mass per unit area, calculated according to standard UNI EN ISO 2286-2, between 1800 and 2200 g/m², e.g., equal to 2000 g/m².

Preferably, the high-density polyethylene fibres are of the recycled type.

The anti-puncture sheet 9 can have a thickness between 3.0 mm and 4.0 mm, preferably substantially equal to 3.5 mm.

Preferably, the non-woven fabric of the upper 2 comprises cotton, polyethylene terephthalate (PET), polyurethane and polyester fibre.

Depending on the shoe model, non-woven fabric types in which the above-mentioned materials are combined in various percentages can be used for the upper 2.

For example, the non-woven fabric of the upper 2 can comprise, by weight, at least 40% cotton, at least 20% PET and at least 15% polyurethane.

The upper 2 preferably has a mass per unit area, measured according to standard EN ISO 3801, between 900 and 700 g/m², e.g., equal to about 790 g/m².

The sole 3 can comprise, on at least one side face, and preferably on both side faces, a plurality of lightening hollows 30 configured to lighten the overall weight of the sole 3.

Such lightening hollows 30 are preferably greater than or equal to three in number and are mutually adjacent to each other.

Such lightening hollows 30 are mutually separated by walls 31, or ribs, which also confer a cushioning and energy return function during walking to the sole 3.

Preferably, the lightening hollows 30 are arranged in the rear area of shoe 1, at the heel of shoe 1.

Preferably the sole 3 is completely and exclusively made of said polyester-based polyurethane by injection moulding directly onto the upper 2.

In other words, the sole 3, comprising both the tread 5, i.e., the portion of the sole itself 3 apt, in use, to be in contact with the ground, and the portion 6 in which the functional insert 7 and the anti-puncture sheet 9 are housed, is made in one piece, mono-material, by means of injection moulding techniques in a single mould, directly on the upper 2.

In accordance, the material in which the sole 3 is made is also configured to meet the mechanical requirements usually required to make the tread 5.

Preferably, the material from which the sole 3 is made has an abrasion resistance, measured according to standard ISO 4649, which provides for measuring the volume of material lost as a result of rubbing tests, lower than 100 mm³, preferably lower than 85 mm³, e.g., equal to about 83 mm³.

Preferably, the polyester-based polyurethane in which the sole 3 is made has a tensile strength, measured according to measurement standard DIN 53504, between 4 and 7 MPa, preferably between 5 and 6 MPa, e.g., substantially equal to 5.5 MPa.

Preferably, the polyester-based polyurethane in which sole 3 is made has an elongation at break, measured according to measurement standard DIN 53504 between 350 and 450%, preferably around 400%.

Preferably, such a polyester-based polyurethane is obtained from a mixture of polyester polyols and a diphenylmethane diisocyanate, which is preferably 4,4'-diphenylmethanediisocyanate.

For example, the weight ratio of polyols to isocyanate is between 100: (105-120). More preferably, the weight ratio between polyols and isocyanate is 100:112.

An amine catalyst is also provided, which is preferably an aliphatic amine, more preferably a tertiary amine, and/or a glycol.

As mentioned, the presence of the safety toecap 4 allows the shoe 1 to meet the current safety standards, and in particular standards UNI EN ISO 20344 and UNI EN ISO 20345, or also Standard UNI EN ISO 20346.

The safety toecap 4 is preferably made of aluminium.

In practice, the light safety shoe, according to the present invention, fulfils the task as well as the intended objects in that it weighs at least 20% less with respect to a corresponding safety shoe of a known type, and is comfortable to wear and use.

Another advantage of the safety shoe, according to the invention, is that it is relatively simple to manufacture, as the sole is made in one piece and moulded directly onto the upper.

## Claims

1. Light safety shoe (1), comprising:
- an upper (2);
- a sole (3) made by means of injection molding directly onto said upper (2);
- a safety toecap (4) placed at the toe of the shoe(1);
- a anti-puncture sheet (9) housed in said sole (3);
- a functional insert (7) placed within said sole (3), below said anti-puncture sheet (9),
**characterized in that**:
- said upper (2) is made of a non-woven fabric having a mass per unit area lower than 1000 g/m²;
- said sole (3) is made of a polyurethane polyester having a density lower than 450 Kg/m³;
- said anti-puncture sheet (9) is made of non-woven fabric and has a mass per unit area lower than 2400 g/m²;
- said functional insert (7) is made of an expanded polyethylene-based compound having a density lower than 70 Kg/m³;
wherein said light safety shoe (1) has, with reference to a European size 42, a weight lower or equal to 400 grams.

2. Light safety shoe (1), according to claim 1, wherein said sole (3) is made of a polyurethane polyester having a Shore hardness from 37 to 48 Shore A inclusive, preferably from 40 to 45 inclusive, even more preferably from 41 to 43 inclusive.

3. Light safety shoe (1), according to claim 1 or 2, wherein said sole (3) is made of a polyurethane polyester having a rebound between 38% and 43% measured according to DIN 53512 standard.

4. Light safety shoe (1), according to one or more of the preceding claims, wherein said sole (3) comprises a first tread portion (5) apt, in use, to be in contact with the ground, and a second portion (6) in which said functional insert (7) and said anti-puncture sheet (9) are housed, said sole (3) being completely and exclusively made of said polyurethane polyester.

5. Light safety shoe (1), according to one or more of the preceding claims, wherein said functional insert (7) is made of an expanded polyethylene-based compound having a Shore hardness from 21 to 34 Shore A inclusive, preferably between 23 and 29.

6. Light safety shoe (1), according to one or more of the preceding claims, wherein said functional insert (7) is made of a polyethylene-based compound with closed-cell expanded polyethylene that is chemically cross-linked.

7. Light safety shoe (1), according to one or more of the preceding claims, wherein said anti-puncture sheet (9) is made of a non-woven fabric comprising high-density polyethylene fibers, synthetic resin and steel fibers.

8. Light safety shoe (1), according to one or more of the preceding claims, wherein said anti-puncture sheet (9) has a thickness between 3,0 mm and 4,0 mm, preferably substantially of 3,5 mm.

9. Light safety shoe (1), according to one or more of the preceding claims, wherein said sole (3) has, at least onto a side face, a plurality of lightening hollows (30) configured to lighten the weight of said sole (3).

10. Light safety shoe (1), according to one or more of the preceding claims, wherein said upper (2) is made of a non-woven fabric comprising cotton, polyethylene terephthalate, polyurethane and polyester fiber.

11. Light safety shoe (1), according to one or more of the preceding claims, wherein said safety toecap (4) is made of aluminum.

12. Light safety shoe (1), according to one or more of the preceding claims, wherein said anti-puncture sheet (9) is in direct contact with the top face of said functional insert (7).

## Patentansprüche

1. Leichter Sicherheitsschuh (1), umfassend:
- eine Obersohle (2);
- eine Sohle (3), die mittels Spritzguss direkt auf die besagte Obersohle (2) aufgebracht ist;
- eine Sicherheits-Zehenkappe (4), die an der Spitze des Schuhs (1) platziert ist;
- eine durchtrittsichere Platte (9), die in besagter Sohle (3) untergebracht ist;
- eine funktionelle Einlage (7), die innerhalb besagter Sohle (3) unterhalb besagter durchtrittsicherer Platte (9) platziert ist,
**dadurch gekennzeichnet, dass**:
- besagte Obersohle (2) aus einem Vliesstoff besteht, der ein Flächengewicht unter 1000 g/m² hat;
- besagte Sohle (3) aus einem Polyurethan-Polyester besteht, der eine Dichte unter 450 kg/m³ hat;
- besagte durchtrittsichere Platte (9) aus einem Vliesstoff besteht und ein Flächengewicht unter 2400 g/m² hat;
- besagte funktionelle Einlage (7) aus einer expandierten Polyethylen-basierten Verbindung mit einer Dichte unter 70 kg/m³ besteht;
wobei der besagte leichte Sicherheitsschuh (1) unter Bezugnahme auf die europäische Größe 42 ein Gewicht von niedriger als oder gleich 400 Gramm hat.

2. Leichter Sicherheitsschuh (1) nach Anspruch 1, wobei besagte Sohle (3) aus einem Polyurethan-Polyester besteht, das eine Shore-Härte von 37 bis einschließlich 48 Shore A, bevorzugt von 40 bis einschließlich 45, noch mehr bevorzugt von 41 bis einschließlich 43, hat.

3. Leichter Sicherheitsschuh (1) nach Anspruch 1 oder 2, wobei besagte Sohle (3) aus einem Polyurethan-Polyester mit einem Rückprall zwischen 38 % und 43 % besteht, gemessen nach der Norm DIN 53512.

4. Leichter Sicherheitsschuh (1) nach einem oder mehreren der vorhergehenden Ansprüche, wobei besagte Sohle (3) einen ersten Laufflächenabschnitt (5), der bei Gebrauch geeignet ist, mit dem Boden in Kontakt zu kommen, und einen zweiten Abschnitt (6) umfasst, in dem besagte funktionelle Einlage (7) und besagte durchtrittsichere Platte (9) untergebracht sind, wobei besagte Sohle (3) vollständig und ausschließlich aus besagtem Polyurethan-Polyester besteht.

5. Leichter Sicherheitsschuh (1) nach einem oder mehreren der vorhergehenden Ansprüche, wobei besagte funktionelle Einlage (7) aus einer expandierten Polyethylen-basierten Verbindung besteht, die eine Shore-Härte von 21 bis einschließlich 34 Shore A, bevorzugt zwischen 23 und 29, hat.

6. Leichter Sicherheitsschuh (1) nach einem oder mehreren der vorhergehenden Ansprüche, wobei besagte funktionelle Einlage (7) aus einer Polyethylen-basierten Verbindung mit geschlossenzelligem expandiertem Polyethylen besteht, das chemisch vernetzt ist.

7. Leichter Sicherheitsschuh (1) nach einem oder mehreren der vorhergehenden Ansprüche, wobei besagte durchtrittsichere Platte (9) aus einem Vliesstoff besteht, der hochdichte Polyethylenfasern, Kunstharz und Stahlfasern umfasst.

8. Leichter Sicherheitsschuh (1) nach einem oder mehreren der vorhergehenden Ansprüche, wobei besagte durchtrittsichere Platte (9) eine Dicke zwischen 3,0 mm und 4,0 mm, bevorzugt im Wesentlichen 3,5 mm, hat.

9. Leichter Sicherheitsschuh (1) nach einem oder mehreren der vorhergehenden Ansprüche, wobei die Sohle (3) mindestens an einer Seitenfläche eine Vielzahl von gewichtsreduzierenden Hohlräumen (30) hat, die konfiguriert sind, um das Gewicht besagter Sohle (3) zu verringern.

10. Leichter Sicherheitsschuh (1) nach einem oder mehreren der vorhergehenden Ansprüche, wobei die Obersohle (2) aus einem Vliesstoff besteht, der Baumwolle, Polyethylenterephthalat, Polyurethan und Polyesterfasern umfasst.

11. Leichter Sicherheitsschuh (1) nach einem oder mehreren der vorhergehenden Ansprüche, wobei die Sicherheits-Zehenkappe (4) aus Aluminium besteht.

12. Leichter Sicherheitsschuh (1) nach einem oder mehreren der vorhergehenden Ansprüche, wobei besagte durchtrittsichere Platte (9) in direktem Kontakt mit der Oberseite der besagten funktionellen Einlage (7) steht.

## Revendications

1. Chaussure de sécurité légère (1), comprenant :
- une tige (2) ;
- une semelle (3) fabriquée au moyen d'un moulage par injection directement sur ladite tige (2) ;
- un embout de sécurité (4) placé au niveau de la pointe de la chaussure (1) ;
- une feuille anti-perforation (9) logée dans ladite semelle (3) ;
- un insert fonctionnel (7) placé à l'intérieur de ladite semelle (3) en dessous de ladite feuille anti-perforation (9),
**caractérisée en ce que** :
- ladite tige (2) est fabriquée à partir d'un tissu non tissé ayant une masse surfacique inférieure à 1000 g/m² ;
- ladite semelle (3) est fabriquée à partir d'un polyester polyuréthane ayant une densité inférieure à 450 Kg/m³ ;
- ladite feuille anti-perforation (9) est fabriquée à partir de tissu non tissé et a une masse surfacique inférieure à 2400 g/m² ;
- ledit insert fonctionnel (7) est fabriqué à partir d'un composé à base de polyéthylène expansé ayant une densité inférieure à 70 Kg/m³ ;
dans laquelle ladite chaussure de sécurité légère (1) a, en référence à une taille européenne 42, un poids inférieur ou égal à 400 grammes.

2. Chaussure de sécurité légère (1), selon la revendication 1, dans laquelle ladite semelle (3) est fabriquée à partir d'un polyester polyuréthane ayant une dureté Shore de 37 à 48 Shore A inclus, de préférence de 40 à 45 inclus, encore plus préférablement de 41 à 43 inclus.

3. Chaussure de sécurité légère (1), selon la revendication 1 ou 2, dans laquelle ladite semelle (3) est fabriquée à partir d'un polyester polyuréthane ayant un rebond compris entre 38 % et 43 % mesuré selon la norme DIN 53512.

4. Chaussure de sécurité légère (1), selon une ou plusieurs des revendications précédentes, dans laquelle ladite semelle (3) comprend une première partie semelle d'usure (5) apte, en utilisation, à être en contact avec le sol, et une deuxième partie (6) dans laquelle sont logés ledit insert fonctionnel (7) et ladite feuille anti-perforation (9), ladite semelle (3) étant entièrement et exclusivement fabriquée à partir dudit polyester polyuréthane.

5. Chaussure de sécurité légère (1), selon une ou plusieurs des revendications précédentes, dans laquelle ledit insert fonctionnel (7) est fabriqué à partir d'un composé à base de polyéthylène expansé ayant une dureté Shore de 21 à 34 Shore A inclus, de préférence entre 23 et 29.

6. Chaussure de sécurité légère (1), selon une ou plusieurs des revendications précédentes, dans laquelle ledit insert fonctionnel (7) est fabriqué à partir d'un composé à base de polyéthylène avec du polyéthylène expansé à cellules fermées qui est réticulé chimiquement.

7. Chaussure de sécurité légère (1), selon une ou plusieurs des revendications précédentes, dans laquelle ladite feuille anti-perforation (9) est fabriquée à partir d'un tissu non tissé comprenant des fibres de polyéthylène haute densité, de la résine synthétique et des fibres d'acier.

8. Chaussure de sécurité légère (1), selon une ou plusieurs des revendications précédentes, dans laquelle ladite feuille anti-perforation (9) a une épaisseur comprise entre 3,0 mm et 4,0 mm, de préférence sensiblement de 3,5 mm.

9. Chaussure de sécurité légère (1), selon une ou plusieurs des revendications précédentes, dans laquelle ladite semelle (3) a, au moins sur une face latérale, une pluralité de creux d'allègement (30) configurés pour alléger le poids de ladite semelle (3).

10. Chaussure de sécurité légère (1), selon une ou plusieurs des revendications précédentes, dans laquelle ladite tige (2) est fabriquée à partir d'un tissu non tissé comprenant du coton, du polyéthylène téréphtalate, du polyuréthane et des fibres de polyester.

11. Chaussure de sécurité légère (1), selon une ou plusieurs des revendications précédentes, dans laquelle ledit embout de sécurité (4) est fabriqué à partir d'aluminium.

12. Chaussure de sécurité légère (1), selon une ou plusieurs des revendications précédentes, dans laquelle ladite feuille anti-perforation (9) est en contact direct avec la face supérieure dudit insert fonctionnel (7).
